# EUROPÄISCHE PATENTSCHRIFT

(11) **EP 0 249 797 B1**
(45) Veröffentlichungstag und Bekanntmachung des Hinweises auf die Patenterteilung: **09.03.1994**
(21) Anmeldenummer: 87107989.3
(22) Anmeldetag: 03.06.1987
(51) Int. Cl.: G05D 16/20

(54) **Druckregelventil**
Pressure-regulating valve
Vanne de régulation de pression

(30) Priorität: 13.06.1986 DE 3619991
(43) Veröffentlichungstag der Anmeldung: 23.12.1987
(73) Patentinhaber: Armaturenfabrik Hermann Voss GmbH + Co., 51688 Wipperfürth (DE)
(72) Erfinder: Rösch, Volker, Dr., D-4330 Mülheim (Ruhr) (DE)
(74) Vertreter: Patentanwälte Dr. Solf & Zapf

(56) Entgegenhaltungen:
- DE-U- 8 520 484
- FR-A- 2 450 368
- ENERGIE FLUIDE, Band 24, Nr. 9, Dezember 1985, Seiten 4-6, Paris, FR; "Régulateurs de pression électropneumatiques à commande électronique intégrée"

## Beschreibung

Die Erfindung betrifft ein Druckregelventil, insbesondere elektro-pneumatisches 3/2-Wegeventil, bestehend aus einem Ventilkörper mit mindestens einem Eingangskanal und mindestens einem Ausgangskanal sowie mit mindestens einem in dem Ventilkörper derart verdrehbar und/oder verschiebbar gelagerten Ventilelement, daß jeweils mindestens zwei Kanäle miteinander verbindbar sind, wobei zumindest einer der Kanäle mit einem elektrischen Drucksensor verbunden ist, der über einen elektronischen Regler und ein Verstellglied das Ventilelement derart ansteuert, daß der Druck in dem entsprechenden Kanal stets mit einem vorgegebenen Sollwert übereinstimmt.

Ein derartiges Druckregelventil ist beispielsweise auf Seite 40 einer im März 1986 herausgegebenen Veröffentlichung des Instituts für hydraulische und pneumatische Antriebe und Steuerungen (IHP) der technischen Hochschule Aachen beschrieben. Derartige Druckregelventile dienen zur elektrischen Einstellung von Drücken, die abhängig von einem elektrischen Sollwert angesteuert werden. Hierzu wird der Istwert eines Ausgangsdruckes mittels des Drucksensors in eine dem Druck proportionale elektrische Größe (z.B. Strom,Spannung) umgeformt und mit einem elektrischen Eingangssignal, d.h. mit dem Sollwert, verglichen. Der elektronische Regler steuert eine elektrische Größe aus, die der Differenz dieser Werte proportional ist und der Richtung der Abweichung entspricht. Über eine nachgeschaltete Leistungselektronik steuert der elektronische Regler ein Verstellglied, zumeist ein Magnetventil, an. Dadurch wird der Istwert des Druckes und gleichzeitig der elektrische Istwert proportional verändert. Die Druckänderung wird beendet, wenn der elektrische Istwert dem vorgegebenen Sollwert entspricht.

Bei den bekannten Druckregelventilen ist jedoch von Nachteil, daß die Drucksensoren in den externen Druckleitungen angeordnet sind. Da darüber hinaus auch die elektronischen Schaltungen extern angeordnet sind, benötigen die bekannten Druckregelventile viel Einbauraum, so daß sie den heutigen Anforderungen hinsichtlich kompakten, kleinen Baugrößen nicht mehr gerecht werden.

Der vorliegenden Erfindung liegt daher die Aufgabe zugrunde, ein Druckregelventil der eingangs beschriebenen Art zu schaffen, das klein und kompakt ausgebildet ist.

Erfindungsgemäß wird dies dadurch erreicht, daß der Ventilkörper mindestens einen zusätzlichen, in den entsprechenden Kanal mündenden, nach außen randoffenen Meßkanal aufweist, in den von außen ein Stopfen dichtend einsetzbar ist, wobei in den Stopfen der Drucksensor mit zugehöriger Meßelektronik sowie mit Anschlüssen für zu dem Verstellglied führende Verbindungsleitungen ingetriert ist. Diese vorteilhafte Ausgestaltung schafft ein besonders kompaktes Druckregelventil, wobei der Drucksensor und die Meßelektronik vorteilhafterweise auch gegen mechanische und sonstige äußere Einflüsse geschützt innerhalb des Stopfens angeordnet sind. Es können daher auch besonders empfindliche, elektronische Bauteile verwendet werden, die sich durch besonders geringe Baugröße auszeichnen. Weitere vorteilhafte Ausgestaltungsmerkmale der Erfindung sind in den Unteransprüchen enthalten.

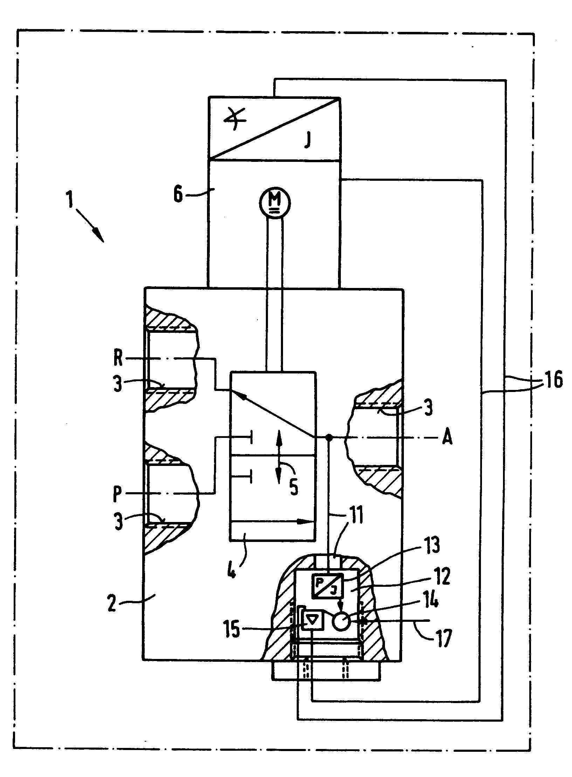

Anhand der Zeichnung soll im folgenden die Erfindung beispielhaft näher erläutert werden.

Die einzige Figur zeigt eine schematische, teilgeschnittene Darstellung eines erfindungsgemäßen Druckregelventils.

In der Zeichnung ist ein elektro-pneumatisches 3/2-Wege-Druckregelventil 1 dargestellt, daß aus einem Ventilkörper 2 besteht, der einen mit einem Druckerzeuger, z. B. einer Pneumatikpumpe verbindbaren Eingangskanal P, einen mit einem Druckmitteltank verbindbaren Rückführkanal R sowie einen mit einem Verbraucher verbindbaren Ausgangskanal A aufweist. Die randoffenen Kanäle P, R, A weisen zweckmäßigerweise zumindest auf ihrer Öffnungsseite jeweils ein Innengewinde 3 zum Anschluß von nichtdargestellten Rohr- oder Schlauchleitungen auf. Innerhalb des Ventilkörpers 2 ist im dargestellten Beispiel ein Ventilelement 4 in Richtung des Doppelpfeils 5 derart zwischen zwei Schaltstellungen verschiebbar angeordnet, daß in einer ersten Schaltstellung die Kanäle P und A und in der dargestellten zweiten Schaltstellung die Kanäle R und A miteinander verbunden sind. Die entsprechenden Verbindungen sind in der Zeichnung lediglich schematisch anhand von Linien dargestellt. Das Ventilelement 4 wird mittels eines Verstellgliedes 6, das in der Regel ein Elektromagnet M ist, bewegt.

Neben der dargestellten Ausführung kann die Erfindung auch bei solchen Druckregelventilen angewendet werden, die mehrere, z. B. zwei, gegeneinander verdreh- und/oder verschiebbare Ventilelemente in dem Ventilkörper 2 derart aufweisen, daß die Kanäle wahlweise untereinander verbindbar sind. Dabei kann es sich auch um ein hydraulisches Ventil handeln.

Erfindungsgemäß weist nun der Ventilkörper 2 mindestens einen zusätzlichen, in den entsprechenden Kanal A, P, R mündenden, nach außen randoffenen Meßkanal 11 auf. Im dargestellten Ausführungsbeispiel der Erfindung mündet der Meßkanal 11 in dem Ausgangskanal A, kann jedoch auch in den Eingangskanal P oder den Rückführkanal R münden. In den Meßkanal 11 ist von außen ein Stopfen 12 dichtend einsetzbar, z. B. einschraubbar, der vorteilhafterweise über eine Weichdichtung gegen den Meßkanal 11 abgedichtet ist. Der Stopfen 12 enthält erfindungsgemäß einen Drucksensor 13 mit zugehöriger Meßelektronik 14 und gegebenenfalls einen Meßverstärker 15 sowie Anschlüsse für Verbindungsleitungen 16 zu dem Verstellglied 6. Der Drucksensor 13 wandelt den in dem Meßkanal 11 und damit auch in dem Kanal A herrschenden Druck P in eine hierzu proportionale elektrische Größe, im dargestellten Beispiel Strom I um. Die Meßelektronik 14, in die zuvor ein Sollwert eingegeben wurde (was der Pfeil 17 andeuten soll), vergleicht den von dem Drucksensor 13 ermittelten Istwert mit dem Sollwert. Anhand der Differenz beider Werte wird eine zu der Differenz proportionale elektrische Größe ausgesteuert und über den Meßverstärker 15 und die Verbindungsleitungen 16 dem Verstellglied 6 zugeführt, welches eine entsprechende Verstellung des Ventilelementes 4 bewirkt, bis der Istwert mit dem Sollwert übereinstimmt. Auf diese Weise wird der Druck P in dem Meßkanal und folglich auch in dem mit diesem verbundenen Kanal (hier A) stets konstant gehalten.

Aufgrund seiner geringen Größe eignet sich als Drucksensor 13 insbesondere ein Laser-Sensor, ein piezosensitiver Sensor oder ein vorzugsweise in Dünnfilmtechnik hergestellter Dehnmeßstreifen.

Das erfindungsgemäße Druckregelventil 1 zeichnet sich durch seine kompakte Form und seine geringe Größe aus, wobei vorteilhafterweise die empfindlichen, elektronischen Bauteile gegen äußere, mechanische Einflüsse geschützt innerhalb des Stopfens 12 angeordnet sind.

## Patentansprüche

1. Druckregelventil (1), insbesondere elektro-pneumatisches 3/2-Wegeventil, bestehend aus einem Ventilkörper (2) mit mindestens einem Eingangskanal (P) und mindestens einem Ausgangskanal (A, R) sowie mit mindestens einem in dem Ventilkörper (2) derart verdrehbar und/oder verschiebbar gelagerten Ventilelement (4), daß jeweils mindestens zwei Kanäle (P,A; A,R) miteinander verbindbar sind, wobei zumindest einer der Kanäle (P, A, R) mit einem elektrischen Drucksensor (13) verbunden ist, der über einen elektronischen Regler und ein Verstellglied (6) das Ventilelement (4) derart ansteuert, daß der Druck in dem entsprechenden Kanal stets mit einem vorgegebenen Sollwert übereinstimmt, **dadurch gekennzeichnet,** daß der Ventilkörper (2) mindestens einen zusätzlichen, in den entsprechenden Kanal (A, P, R) mündenden, nach außen randoffenen Meßkanal (11) aufweist, in den von außen ein Stopfen (12) dichtend einsetzbar ist, wobei in den Stopfen (12) der Drucksensor (13) mit zugehöriger Meßelektronik (14) sowie mit Anschlüssen für zu dem Verstellglied (6) führende Verbindungsleitungen (16) integriert ist.

2. Druckregelventil nach Anspruch 1, **dadurch gekennzeichnet,** daß der Stopfen (12) über eine Weichdichtung gegen den Meßkanal (11) abgedichtet ist.

3. Druckregelventil nach Anspruch 1 oder 2, **dadurch gekennzeichnet,** daß der Drucksensor (13) ein Laser-Sensor ist.

4. Druckregelventil nach Anspruch 1 oder 2, **dadurch gekennzeichnet,** daß der Drucksensor (13) ein piezosensitiver Sensor ist.

5. Druckregelventil nach Anspruch 1 oder 2, **dadurch gekennzeichnet,** daß der Drucksensor (13) ein vorzugsweise in Dünnfilmtechnik hergestellter Dehnmeßstreifen ist.

6. Druckregelventil nach einem oder mehreren der Ansprüche 1 bis 5, **dadurch gekennzeichnet,** daß der Meßkanal (11) in den mit einem Verbraucher verbundenen Ausgangskanal (A) mündet.

7. Druckregelventil nach einem oder mehreren der Ansprüche 1 bis 5, **dadurch gekennzeichnet,** daß der Meßkanal (11) in den mit einem Druckerzeuger verbundenen Eingangskanal (P) mündet.

## Claims

1. Pressure-regulating valve (1), in particular electro-pneumatic 3/2-way valve, comprising a valve body (2) having at least one input channel (P) and at least one output channel (A, R) as well as having at least one valve element (4) which is mounted to be rotatable and/or displaceable in the valve body (2) such that in each case at least two channels (P, A; A, R) can be connected to one another, at least one of the channels (P, A, R) being connected to an electrical pressure sensor (13) which controls the valve element (4) by way of an electronic regulator and an adjusting member (6) such that the pressure in the corresponding channel always matches a predetermined set value, characterized in that the valve body (2) has at least one additional measuring channel (11) which opens into the corresponding channel (A, P, R) has an outwardly open edge and into which a stopper (12) can be inserted in sealing manner from outside, the pressure sensor (13) with associated measurement electronics (14) and with connections for the connection lines (16) which lead to the adjusting member (6) being integrated in the stopper (12).

2. Pressure-regulating valve according to Claim 1, characterized in that the stopper (12) is sealed off with respect to the measuring channel (11) by way of a soft seal.

3. Pressure-regulating valve according to Claim 1 or 2, characterized in that the pressure sensor (13) is a laser sensor.

4. Pressure-regulating valve according to Claim 1 or 2, characterized in that the pressure sensor (13) is a piezo-sensitive sensor.

5. Pressure-regulating valve according to Claim 1 or 2, characterized in that the pressure sensor (13) is an expansion-measuring strip preferably produced by a thin-film technique.

6. Pressure-regulating valve according to one or more of Claims 1 to 5, characterized in that the measuring channel (11) opens into the output channel (A) connected to a consumer.

7. Pressure-regulating valve according to one or more of Claims 1 to 5, characterized in that the measuring channel (11) opens into the input channel (P) connected to a pressure generator.

## Revendications

1. Vanne de régulation de pression (1), en particulier distributeur électro-pneumatique à 3/2 voies, comprenant un corps de vanne (2) comportant au moins un canal d'entrée (P) et au moins un canal de sortie (A, R), ainsi qu'au moins un élément de vanne (4) monté pivotant et/ou mobile dans le corps (2) de manière à pouvoir relier entre eux au moins deux canaux (P, A ; A, R), au moins un des canaux (P, A, R) étant relié à un capteur électrique de pression (13) qui, par un dispositif électronique de régulation et un organe de réglage (6), commande l'élément (4) de manière à ce que la pression dans le canal correspondant soit toujours en conformité avec une valeur de référence déterminée,
caractérisée par le fait que le corps de vanne (2) comporte au moins un canal supplémentaire de mesure (11) dont les extrémités s'ouvrent vers l'extérieur et qui débouche dans le canal correspondant (A, R, P) et dans lequel on peut insérer de manière étanche depuis l'extérieur un bouchon (12), le capteur de pression (13) avec son électronique de mesure (14) et des connexions de lignes (16) conduisant à l'organe de réglage (6) étant intégré dans le bouchon (12).

2. Vanne de régulation de pression selon la revendication 1,
caractérisée par le fait que le bouchon (12) est étanche par rapport au canal de mesure (11) grâce à une garniture molle.

3. Vanne de régulation de pression selon la revendication 1 ou 2,
caractérisée par le fait que le capteur de pression (13) est un capteur à laser.

4. Vanne de régulation de pression selon la revendication 1 ou 2,
caractérisée par le fait que le capteur de pression (13) est un capteur piézosensible.

5. Vanne de régulation de pression selon la revendication 1 ou 2,
caractérisée par le fait que le capteur de pression (13) est un extensomètre à bande réalisé de préférence selon la technique des films minces.

6. Vanne de régulation de pression selon l'une ou plusieurs des revendications 1 à 5,
caractérisée par le fait que le canal de mesure (11) débouche dans le canal de sortie (A) relié à un utilisateur.

7. Vanne de régulation de pression selon l'une ou plusieurs des revendications 1 à 5,
caractérisée par le fait que le canal de mesure (11) débouche dans le canal d'entrée (P) relié à un générateur de pression.
